# EUROPEAN PATENT APPLICATION

(11) **EP 3 542 888 A1**
(43) Date of publication of application: **25.09.2019**
(21) Application number: 19164896.3
(22) Date of filing: 25.03.2019
(51) Int. Cl.: B01D 53/86, A62C 3/06, A62C 3/08, B64D 37/32

(54) **TEMPERATURE SENSORS FOR PREDICTION OF CATALYTIC INERTING LIFE**

(30) Priority: 23.03.2018 US 201815934119
(71) Applicant: Hamilton Sundstrand Corporation, Charlotte, NC 28217-4578 (US)
(72) Inventor: Surawski, Eric, Glastonbury, CT 06033 (US); Mantese, Joseph V., Ellington, CT 06029 (US)
(74) Representative: Dehns

(57) **Abstract**

A catalytic oxidation system for generating inert gas includes a catalytic oxidation unit (20), which includes a catalyst (40) oriented between an inlet (38) and an outlet (34) of the catalytic oxidation system, a first temperature sensor (42) in operable communication with the catalyst, and a second temperature sensor (43) in operable communication with the catalyst. The first temperature sensor is nearer to the inlet than the second temperature sensor and the second temperature sensor is nearer to the outlet than the first temperature sensor.

## Description

### BACKGROUND

The present disclosure relates generally to air inerting systems for aircraft and other applications where an inert gas may be required and, more specifically, to air inerting systems using catalytic oxidation.

Aircraft fuel tanks can contain potentially combustible combinations of oxygen, fuel vapors, and ignition sources. Commercial aviation regulations require actively managing the risk of explosion in the vapor space (i.e., ullage) above the liquid fuel in fuel tanks. This can be accomplished by reducing the oxygen concentration in the ullage by displacing the air in the ullage with an inert gas containing less than 12% oxygen. Conventional fuel tank inerting (FTI) methods include air separation module (ASM) methods that utilize hollow fiber membranes to separate ambient air into nitrogen-enriched air, which is directed to fuel tanks, and oxygen-enriched air, which is usually rejected overboard. AMS methods rely on bleed air from a compressor stage of an engine, which is not always available in the desired quantity at sufficient pressure.

### SUMMARY

A catalytic oxidation system for generating inert gas includes a catalytic oxidation unit, which includes a catalyst oriented between an inlet and an outlet of the catalytic oxidation system, a first temperature sensor in operable communication with the catalyst, and a second temperature sensor in operable communication with the catalyst. The first temperature sensor is nearer to the inlet than the second temperature sensor and the second temperature sensor is nearer to the outlet than the first temperature sensor.

A method of determining an effectiveness of a catalyst for inert gas production includes flowing a mixture of first and second reactants through a catalyst, wherein the mixture comprises a known stoichiometric ratio of first to second reactants, measuring a first temperature at a first location of the catalyst at a first time during operation of the catalyst, measuring a second temperature at the first location at a second time during operation of the catalyst, sending the first and second temperature measurements to a processor, and evaluating a function of the catalyst. The second temperature is taken at a second time that is after the first time and after a period of operation of the catalyst has expired.

The present summary is provided only by way of example, and not limitation. Other aspects of the present disclosure will be appreciated in view of the entirety of the present disclosure, including the entire text, claims and accompanying figures.

### BRIEF DESCRIPTION OF THE DRAWINGS

FIG. 1 is a schematic diagram of an inert gas generating system including a catalytic oxidation unit.
FIG. 2 is schematic diagram of a catalytic oxidation unit.
FIG. 3 is flow chart of method for determining an effectiveness of a catalyst over time.

While the above-identified figures set forth embodiments of the present invention, other embodiments are also contemplated, as noted in the discussion. In all cases, this disclosure presents the invention by way of representation and not limitation. It should be understood that numerous other modifications and embodiments can be devised by those skilled in the art, which fall within the scope of the invention as defined by the claims. The figures may not be drawn to scale, and applications and embodiments of the present invention may include features, steps and/or components not specifically shown in the drawings.

### DETAILED DESCRIPTION

Catalytic oxidation of fuel is an alternative to traditional air separation modules (ASM) used to produce inert air onboard an aircraft for uses such as fuel tank inerting (FTI). In catalytic oxidation, a catalyst is used to catalyze a chemical reaction between oxygen (O₂) and hydrocarbon fuel to produce carbon dioxide (CO₂) and water. Catalysts can become less effective over time and thereby require maintenance and/or replacement. Oxygen sensors placed at an outlet or in an exhaust flow of a catalyst can be used to determine the effectiveness and predict the remaining life of the catalyst (e.g., increases in oxygen concentration in the exhaust gas can be an indicator that the effective lifetime of the catalyst is nearing an end). Oxygen sensors are expensive and, therefore, alternative methods are desired. Catalytic oxidation is an exothermic reaction and, therefore, temperature can be an indicator of the completeness of the reaction. The present invention uses temperature sensors to monitor the effectiveness of the catalyst and predict the remaining catalyst lifetime. Temperature sensors can be placed at various locations along the catalyst body to detect changes in a temperature gradient across the catalyst. A reduction in the temperature near the inlet of the catalyst and/or change in the temperature gradient can be an indicator that the reaction is incomplete. The temperature measurements can be used to determine the amount of unreacted oxygen that is exiting the catalyst and to predict a remaining lifetime of the catalyst (i.e., when the catalyst will fail).

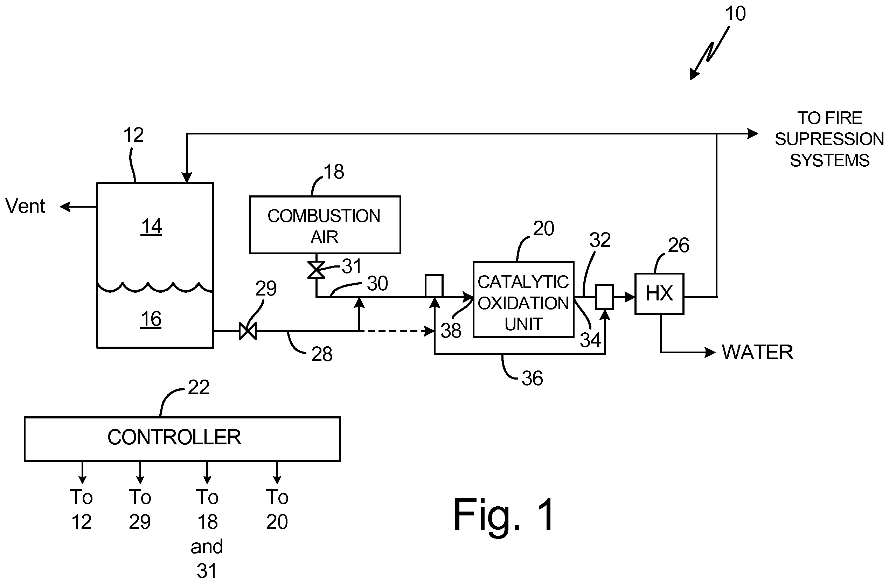

FIG. 1 is a simplified schematic diagram of inert gas generating system 10, which can be present on-board an aircraft. Inert gas generating system 10 includes fuel tank 12, which includes ullage space 14 above liquid hydrocarbon fuel 16 and at least one vent, combustion air source 18, COU 20, and controller 22. Inert gas generating system 10 can produce a predominantly inert gas by mixing hydrocarbon fuel 16 and a source of oxygen, such as combustion air source 18, in the presence of a catalyst (i.e., COU 20). Reaction of hydrocarbon fuel 16 and combustion air 18 produces carbon dioxide and water vapor. The water vapor can be condensed from the exhaust gas exiting COU 20, for example, by heat exchanger 26. The carbon dioxide is an inert gas that is mixed with nitrogen naturally found in fresh/ambient air, and which flows through COU 20 unreacted. The inert gas can be directed back to fuel tank 12 to displace gas in ullage 14 and/or can be directed to fire suppression systems.

Controller 22 can be operatively coupled (e.g., electrically and/or communicatively) to components shown in FIG. 1 as well as components not depicted (e.g., valves, sensors, etc.) to control operation of inert gas generating system 10. Controller 22 can include one or more processors and machine-readable memory configured to store information within controller 22 during operation. Controller 22 can be a stand-alone device dedicated to the operation of the catalytic oxidation unit, or it can be integrated with another controller.

Liquid fuel 16 can be kerosene-based jet fuel, such as Jet-A, Jet-Al, or Jet-B fuel. For military applications, liquid fuel 16 can also be a jet propulsion "JP" class fuel, such as JP-5 or JP-8. Other types of fuel such as diesel, gasoline, and mixtures of fuels are also contemplated herein. Ullage space 14, which is a vapor space present above liquid fuel 16 in fuel tank 12, can contain potentially combustible fuel vapors. System 10 operates to reduce the risk of combustion and explosion within ullage space 14 by providing inert gas to maintain the oxygen concentration within ullage space 14 at or below 12% oxygen by volume for commercial aviation, and below 9% by volume for military applications.

A portion of hydrocarbon fuel 16 can be extracted from fuel tank 12 and delivered to COU 20 via fuel supply line 28. Delivery of fuel 16 to COU 20 can be controlled by one or more valves 29. Hydrocarbon fuel vapor 16 is mixed with combustion air 18 prior to entering COU 20 for reaction in COU 20. In some embodiments, liquid fuel 16 can be directly injected into a gas supply line entering COU 20 (e.g., combustion air supply line 30) through a fuel injector capable of atomizing fuel 16 for mixture with combustion air 18. In alternative embodiments, hydrocarbon fuel vapors 16 in ullage 14 can be separated from a gaseous mixture in ullage 14 or hydrocarbon fuel vapor 16 can be produced from liquid fuel 16 in an evaporator container (not shown). Hydrocarbon fuel vapor 16 can be delivered to COU 20 in combination with combustion air 18 through a gas supply line, such as combustion air supply line 30. In some embodiments, an additional mixer, such as an ejector or jet pump, can be used to produce a gaseous mixture of fuel 16 and combustion air 18 for delivery to COU 20.

Combustion air 18 provides a source of oxygen for reaction with hydrocarbon fuel 16 in COU 20. Combustion air 18 can be supplied by one or more air sources including, but not limited to, fan bleed air, ram air, cabin outflow air, and compressor bleed air. Combustion air 18 can be supplied to COU 20 through supply line 30. Delivery of combustion air 18 can be controlled by one or more valves 31. In some embodiments, combustion air 18 can be cooled or heated via a heat exchanger or source of heat or cooling as known in the art to obtain an optimal inlet gas temperature for reaction in COU 20. In some embodiments, a temperature of the gaseous mixture of fuel 16 and combustion air 18 at a COU 20 inlet is between 150 °C and 225 °C, but this temperature can vary depending on the type of catalyst used.

COU 20 contains a catalyst capable of inducing a chemical reaction between hydrocarbon fuel 16 and combustion air 18. The catalyst material can include, but is not limited to, a noble metal, transition metal, metal oxide, and combinations thereof. The catalyst in COU 20 induces a chemical reaction between hydrocarbon fuel 16 and combustion air 18, which produces exhaust gas 32 containing carbon dioxide, water, and any unreacted gases. The reaction is exothermic and, therefore, can also generate a significant amount of heat depending on the amount of reactants available for reaction. The chemical reaction for a stoichiometric mixture of fuel and air has a general formula of:

CₓH_{y} + (x+y/4)O₂ + N2 → xCO₂ + (y/2)H₂O + N₂

The exact reactions depend on the type of fuel used and types of hydrocarbons present in the fuel mixture. For a stoichiometric mixture, the reaction results in complete consumption of oxygen and hydrocarbons to produce an inert gas containing carbon dioxide, water, and nitrogen, which exits COU 20 through outlet 34. Any inert gas species (e.g., carbon dioxide, water, and nitrogen) that enter COU 20 in the gaseous mixture of hydrocarbon fuel 16 and combustion air 18 will not react and will thus pass through COU 20 chemically-unchanged. If an oxygen-to-fuel ratio (ratio of combustion air 18 to fuel 16) is greater than stoichiometry, or having a relative stoichiometric ratio greater than 1, more oxygen than needed for reaction of hydrocarbons will enter COU 20. Any unreacted oxygen will exit COU 20 in exhaust gas 32. Ideally, the gas returned to fuel tank 12 for inerting of ullage space 14 or directed to fire suppression systems has a minimal or near-zero concentration of oxygen for maximum inerting effect. This requires a near-stoichiometric oxygen-to-fuel ratio.

Reaction of fuel 16 and combustion air 18 at near-stoichiometric conditions can result in significant heat release, which can damage COU 20. The amount of heat produced can be managed and reduced by recycling a portion of exhaust gas 32, which is generally inert, through optional recycle duct 36 back to COU 20. Inert exhaust gas 32 dilutes the mixture of air and fuel entering COU 20, which reduces the amount of reactants available for catalytic reaction, decreases concentrations gradients across the reactor, and changes the residence time across the catalyst. Alternatively, COU 20 can be cooled by being located in a heat exchange relationship with a cooling airflow (e.g., ram air).

Jet fuel can contain sulfur compounds (sulfides, thiols, thiophenes, etc.), which can reversibly poison the reaction catalyst in COU 20 by binding to active sites and reducing the active area available for promoting the oxidation reactions. After a period of use of system 10, COU 20 may need to be regenerated. Catalysts can be regenerated by running an oxygen-containing gas stream through COU 20 without fuel. This causes desorption of sulfur species and oxidizes any surface contaminants on the catalyst's surface. Care should be taken to avoid overheating or sintering the catalyst, causing damage to active catalyst surface sites. A preferable method of regeneration uses a low concentration oxygen gas, such as gas drawn from an inerted fuel tank ullage 14. Regeneration can occur on-board or off-board of the aircraft.

Operation of COU 20 must be monitored to ensure proper operation (e.g., inert gas has oxygen concentration at or below the required 12% or 9% by volume). Ideally, operators will be alerted well before oxygen concentrations exceed a threshold value, such that maintenance on COU 20 can be scheduled in advance without interrupting scheduled service. Because the catalytic reaction is exothermic, temperature sensors can be used to monitor the effectiveness of the catalyst over time and predict the effective lifetime of the catalyst.

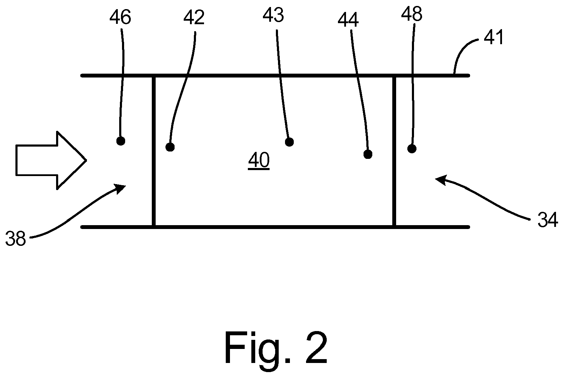

FIG. 2 is a schematic diagram of COU 20, including inlet 38, outlet 34, and catalyst 40 in housing 41. Temperatures sensors 42, 43, and 44 are positioned within or in operable communication with catalyst 40 to monitor the heat of reaction, with temperature sensor 42 nearer to inlet 38 than temperature sensors 43 and 44, and with temperature sensor 44 nearer to outlet 34. Optional temperature sensor 46 can be placed at inlet 38 to monitor the temperature of the gaseous mixture of fuel 16 and combustion air 18 entering catalyst 40. Optional temperature sensor 48 can be placed at outlet 34 to monitor exhaust gas 32 exiting catalyst 40.

Catalyst 40 is capable of inducing a chemical reaction between hydrocarbon fuel 16 and combustion air 18. The material of catalyst 40 can include, but is not limited to, a noble metal, transition metal, metal oxide, and combinations thereof. Catalyst 40 can be a monolithic body permeable to gas, including gaseous hydrocarbon fuel 16, combustion gas 18, and exhaust gas 32. In some embodiments, catalyst 40 can have a honeycomb structure. As the gaseous mixture of hydrocarbon fuel 16 and combustion air 18 passes through catalyst 40, catalyst induces an oxidation reaction between the two gaseous reactants, producing carbon dioxide, water, and heat.

The amount of heat produced can be measured by temperature sensors 42 and 44 and can also be calculated based on the relative stoichiometric oxygen-to-fuel ratio, quantity of reactants, and the heat of reaction. The heat of reaction will vary depending on the type of hydrocarbons present. The quantity of reactants will depend on the flow rate of the gaseous mixture of hydrocarbon fuel 16 and combustion air 18 entering COU 20. During steady-state operation, the relative stoichiometric oxygen-to-fuel ratio and quantity of reactants remains relatively constant and, therefore, as long as the performance of catalyst 40 remains unchanged, temperatures measured by temperature sensors 42 and 44 will also remain relatively constant. During steady state-operation, a temperature gradient will exist across catalyst 40, with the temperature increasing toward outlet 34. If the relative stoichiometric oxygen-to-fuel ratio or the flow rate of the gaseous mixture fluctuates, changes in temperatures sensed by temperature sensors 42 and 44 can be corrected. As previously discussed, catalyst 40 has a finite life that will vary depending on operating conditions. As catalyst 40 "dies," the temperature rise at the front of catalyst 40 adjacent to inlet 38 will be reduced. The reduction in temperature can be indicative ofhow much life catalyst 40 has remaining before requiring maintenance.

Temperature sensor 42 is located at the front of catalyst 40 adjacent to inlet 38 to detect any reduction in temperature, particularly during steady-state operation. Temperature sensors 43 and 44 can be located with respect to temperature sensor 42 to detect any changes in the temperature gradient across catalyst 40. For example, temperature sensor 43 can be centrally located between inlet 38 and outlet 34. Temperature sensor 44 is located at the rear of catalyst 40 adjacent to outlet 34. Temperature sensors 42, 43, and 44 can be resistance temperature detectors (e.g., platinum resistance probes) capable of measuring temperatures up to 1200 degrees Celsius, which can be reached in the catalytic reaction in some systems. Temperatures of catalyst 40 can vary depending on the oxygen-to-fuel ratio and quantity of reactants with some systems having steady-state operating temperatures closer to 500 degrees Celsius. Therefore, temperature sensors may have different operating requirements depending on the operating conditions present. Temperature sensors 42, 43, and 44 can be embedded in catalyst 40. In some embodiments, temperature sensors 42, 43, and 44 may be generally centrally located in a cross-section of catalyst 40. In other embodiments, temperature sensors 42, 43, and 44 can be located nearer housing 41.

Temperature sensors 42, 43, and 44 are in communication with controller 22, which includes a processor configured to receive temperature signals from temperature sensors 42, 43, and 44 and identify changes in the function of catalyst 40 (i.e., ability of catalyst 40 to oxidize hydrocarbons) based on temperature data received over a period of operation. Based on changes in temperature detected by temperature signals 42, 43, and 44, controller 22 is able to predict a remaining effective lifetime of catalyst 40. This information can be relayed through a maintenance signal system to an operator well in advance of catalyst failure to allow time to schedule maintenance.

Optional temperature sensors 46 and 48 can be located at inlet 38 and outlet 34, respectively. Temperature sensor 46 can be configured to measure a temperature of the gaseous mixture of hydrocarbon fuel 16 and combustion air 18 entering COU 20. Temperature sensor 48 can be configured to measure a temperature of exhaust gas 32 exiting outlet 34. Temperature sensors 46 and 48 can be resistance detectors. Temperature sensors 46 and 48 can be in communication with controller 22, which can store and process data received from temperature sensors 46 and 48.

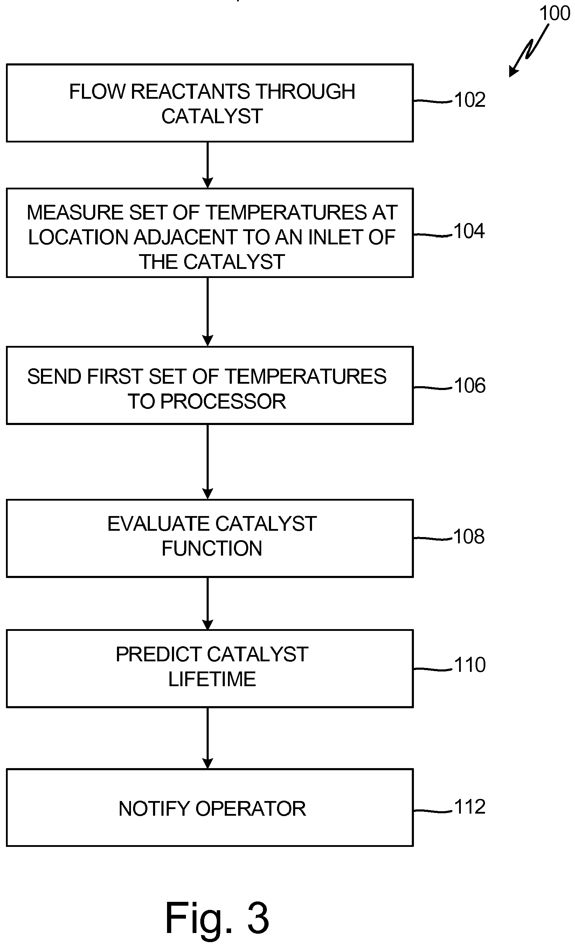

FIG. 3 is a flow chart of method 100 for determining the effectiveness of catalyst 40 for inert gas production. During steady-state operation, a gaseous mixture of hydrocarbon fuel 16 and combustion air 18 with a known stoichiometric ratio of oxygen-to-fuel is continuously passed through catalyst 40 (step 102). Temperature sensors 42, 43, and 44 detect or measure the temperature within the catalyst during and/or throughout operation (step 104). Multiple temperature measurements can be made, however, a change in catalyst function or ability of the catalyst to oxidize hydrocarbons may be identified by differences in temperatures measured by one of temperature sensors 42, 43, or 44 at a first time and by the same temperature sensor at a second time after the first time and after a period of operation of catalyst 40 has expired. In some embodiments, temperature sensors 42, 43, and 44 can measure the temperature of catalyst 40 at regular intervals or continuously over time thereby providing the temperature at different times during operation of catalyst 40. Temperature signals can be relayed from temperature sensors 42, 43, and 44 to controller 22 (step 106). Controller 22 processes temperature data received from temperature sensors 42, 43, and 44 to identify changes in temperature during steady-state operations at each location of temperature sensors 42, 43, and 44 and changes in the temperature gradient across catalyst 40. In this manner, controller 22 is able to evaluate change in catalyst function over time (step 108). Based on changes in temperature and temperature gradient, controller 22 predicts the remaining effective lifetime of catalyst 40 (step 110) and signals or notifies the operator through a maintenance message when maintenance on catalyst 40 will be required (step 112).

Temperature sensors can provide a cost-effective way to monitor the function of catalyst 40 overtime and the temperature data collected can be used to predict the effective lifetime of catalyst 40 well in advance of catalyst failure. This information can allow operators to schedule maintenance.

### Summation

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transient alignment or shape variations induced by thermal, rotational or vibrational operational conditions, and the like. Moreover, any relative terms or terms of degree used herein should be interpreted to encompass a range that expressly includes the designated quality, characteristic, parameter or value, without variation, as if no qualifying relative term or term of degree were utilized in the given disclosure or recitation.

### Discussion of Possible Embodiments

The following are non-exclusive descriptions of possible embodiments of the present invention.

A catalytic oxidation system for generating inert gas includes a catalytic oxidation unit, which includes a catalyst oriented between an inlet and an outlet of the catalytic oxidation system, a first temperature sensor in operable communication with the catalyst, and a second temperature sensor in operable communication with the catalyst. The first temperature sensor is nearer to the inlet than the second temperature sensor and the second temperature sensor is nearer to the outlet than the first temperature sensor.

The catalytic oxidation system of the preceding paragraph can optionally include, additionally and/or alternatively, any one or more of the following features, configurations, and/or additional components:
The first temperature sensor can be embedded in the catalyst.

The first and second temperature sensors can be embedded in the catalyst.

The catalyst can be a monolithic body.

The first and second temperature sensors comprise resistive temperature devices.

A third temperature sensor can be located in an outlet of the catalytic oxidation unit.

A fourth temperature sensor can be located in the inlet of the catalytic oxidation unit upstream of the catalyst.

A processor having a machine-readable memory can be configured to receive data from the first and second temperature sensors and to determine changes in the function of the catalyst based on temperature data received over a period of operation. The changes in function relate to the ability of the catalyst to oxidize hydrocarbons.

The processor can predict a remaining effective lifetime of the catalyst based on temperature data received.

A method of determining an effectiveness of a catalyst for inert gas production includes flowing a mixture of first and second reactants through a catalyst, wherein the mixture comprises a known stoichiometric ratio of first to second reactants, measuring a first temperature at a first location of the catalyst at a first time during operation of the catalyst, measuring a second temperature at the first location at a second time during operation of the catalyst, sending the first and second temperature measurements to a processor, and evaluating a function of the catalyst. The second temperature is taken at a second time that is after the first time and after a period of operation of the catalyst has expired.

The method of the preceding paragraph can optionally include, additionally and/or alternatively, any one or more of the following features, configurations, additional components, and/or steps:
The method of any of the preceding paragraphs can further include processing the first and second temperature measurements to identify a reduction in catalyst function.

The method of any of the preceding paragraphs can further include notifying a user of the reduction in catalyst function.

The method of any of the preceding paragraphs can further include measuring a third temperature at a second location of the catalyst at the first time during operation of the catalyst, and measuring a fourth temperature at the second location of the catalyst at the second time during operation of the catalyst.

The method of the preceding paragraph, wherein the second location ca be adjacent to an outlet of the catalyst.

The method of any of the preceding paragraphs, wherein the first location is adjacent to an inlet of the catalyst.

The method of any of the preceding paragraphs can further include measuring the temperature with a temperature sensor imbedded in the catalyst.

Processing the first and second temperature measurements can further include predicting a remaining effective lifetime of the catalyst.

The method of any of the preceding paragraphs can further include notifying a user of the predicted remaining effective lifetime of the catalyst.

Catalyst function can relate to the ability of the catalyst to oxidize hydrocarbons.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the scope thereof. Therefore, it is intended that the invention not be limited to the particular embodiment(s) disclosed, but that the invention will include all embodiments falling within the scope of the appended claims.

## Claims

1. A catalytic oxidation system for generating inert gas, the system comprising:
a catalytic oxidation unit (20) comprising:
a catalyst (40) oriented between an inlet (38) and an outlet (34) of the catalytic oxidation system;
a first temperature sensor (42) in operable communication with the catalyst; and
a second temperature sensor (43) in operable communication with the catalyst, the first temperature sensor being nearer to the inlet than the second temperature sensor and the second temperature sensor being nearer to the outlet than the first temperature sensor.

2. The system of claim 1, wherein the first temperature sensor (42) is embedded in the catalyst.

3. The system of claim 2, wherein the second temperature sensor (43) is embedded in the catalyst.

4. The system of any preceding claim, wherein the catalyst (40) is a monolithic body.

5. The system of any preceding claim, wherein the first and second temperature sensors (42, 43) comprise resistive temperature devices.

6. The system of any preceding claim, and further comprising:
a third temperature sensor (44) located in an outlet of the catalytic oxidation unit.

7. The system of any preceding claim, and further comprising:
a fourth temperature sensor (46) located in the inlet of the catalytic oxidation unit upstream of the catalyst.

8. The system of any preceding claim and further comprising:
a processor (22) having a machine-readable memory, wherein the processor is configured to receive data from the first and second temperature sensors and to determine changes in the function of the catalyst based on temperature data received over a period of operation, wherein changes in function relate to the ability of the catalyst to oxidize hydrocarbons, and preferably wherein the processor predicts a remaining effective lifetime of the catalyst based on temperature data received.

9. A method of determining an effectiveness of a catalyst for inert gas production, the method comprising:
flowing a mixture of first and second reactants through a catalyst, wherein the mixture comprises a known stoichiometric ratio of first to second reactants;
measuring a first temperature at a first location of the catalyst at a first time during operation of the catalyst;
measuring a second temperature at the first location at a second time during operation of the catalyst, the second time being after the first time and after a period of operation of the catalyst has expired;
sending the first and the second temperature measurements to a processor; and
evaluating a function of the catalyst.

10. The method of claim 9 and further comprising:
processing the first and second temperature measurements to identify a reduction in catalyst function, and preferably further comprising:
notifying a user of the reduction in catalyst function.

11. The method of claim 9 or 10 and further comprising:
measuring a third temperature at a second location of the catalyst at the first time during operation of the catalyst; and
measuring a fourth temperature at the second location of the catalyst at the second time during operation of the catalyst, and preferably wherein the second location is adjacent to an outlet of the catalyst.

12. The method of claim 9, 10 or 11, wherein the first location is adjacent to an inlet of the catalyst.

13. The method of any of claims 9 to 12, wherein the temperature is measured with a temperature sensor imbedded in the catalyst.

14. The method of any of claims 9 to 13, wherein processing the first and second temperature measurements further comprises predicting a remaining effective lifetime of the catalyst, and preferably further comprising:
notifying a user of the predicted remaining effective lifetime of the catalyst.

15. The method of any of claims 9 to 14, wherein catalyst function relates to the ability of the catalyst to oxidize hydrocarbons.
